Europäisches Patentamt

European Patent Office

Office européen des brevets

(11) Publication number: **0 030 260**
**B1**

# (12) EUROPEAN PATENT SPECIFICATION

(45) Date of publication of patent specification: 25.04.84

(51) Int. Cl.³: **G 06 K 13/063,**
G 06 K 7/08

(21) Application number: **80106083.1**

(22) Date of filing: **07.10.80**

(54) Information transducing apparatus.

(30) Priority: **05.12.79 US 100589**

(43) Date of publication of application:
**17.06.81 Bulletin 81/24**

(45) Publication of the grant of the patent:
**25.04.84 Bulletin 84/17**

(84) Designated Contracting States:
**CH DE FR GB IT LI NL**

(56) References cited:
**FR - A - 1 252 678**
**FR - A - 1 562 959**
**US - A - 3 109 924**

**IBM TECHNICAL DISCLOSURE BULLETIN, vol.
23, no. 2, July 1980, page 546, Armonk, U.S.A.
J.P. AIKENS et al.: "Wear-indicating pressure
belt"**

(73) Proprietor: **International Business Machines
Corporation
Old Orchard Road
Armonk, N.Y. 10504 (US)**

(72) Inventor: **Galatha, Matthew J.
1646 Cavendish Court
Charlotte North Carolina 28211 (US)**
Inventor: **Rohrer, Gene Dale
2053 High Ridge Lane
Concord North Carolina 28025 (US)**
Inventor: **Squires, John Jay
3465 Teakwood Drive
Kannapolis North Carolina 28081 (US)**

(74) Representative: **Atchley, Martin John Waldegrave
IBM United Kingdom Patent Operations Hursley
Park
Winchester, Hants, SO21 2JN (GB)**

Courier Press, Leamington Spa, England.

Information transducing apparatus

This invention relates to apparatus for transducing information from a series of documents, and particularly, but not exclusively, to automatic bank cheque readers.

Automatic readers such as those used to read stylized magnetic images from bank cheques are required rapidly and reliably to transport the documents past a transducer.

Bank cheques typically include a row of highly stylized characters, positioned along the lower margin, which are magnetisable for automatic reading to expedite the accounting and distribution of the cheques and the transactions they represent. The automatic equipment passes the magnetised characters over a transducer which generates a pattern of electrical signals which in turn is analysed by a recognition process to determine, for example, the destination of the cheque and automatically to control a sorter associated with the equipment to sort the cheque physically according to its destination. There are several factors which can interfere with the accurate reproduction of the desired pattern of electrical signals from a cheque, including the printing of the stylised character, the presence of folds, wrinkles or tears in the cheque, and the stable uniform condition of the cheque transport and support equipment itself. Where the recognition process is unable fully to recognize the information contained on the cheque, the cheque is sorted into a reject bin. These "reject" cheques must then be read by bank personnel and processed manually. Obviously, it is desirable to keep the percentage of rejected cheques to a minimum.

Many of the rejects can be attributed to the physical behaviour of the cheque itself as it moves past the transducer. Ideally, a cheque would move past the transducer at a uniform speed in continuous contact with the transducer and with a constant pressure thereagainst. Distortions of the cheque, cheques of differing thickness, and progressive wear of the transducer and adjacent parts, produce deviations from this ideal. As processing speed increases, inertial and resonance factors, resulting from intermittent loads imposed by the passage of successive cheques, cause an increasingly significant deviation from the ideal condition.

There presently exists successful high-speed automatic cheque reading equipment which employs a power driven, rotating brush to provide a supporting pressure against the back of the cheque to hold the cheque against the surface of the transducer as the cheque is transported therepast. One characteristic of such a brush device is that it has a relatively critical spatial relationship to the transducer, requiring a highly trained person to adjust and replace it. Soft rubber rollers are also employed as backup devices in a mechanism of this type; however, such rollers tend also to have critical adjustments and, in addition, produce increased progressive wear of the transducer.

In US—A—3,109,924 is disclosed apparatus for transducing information from a series of documents, including transport means for moving documents seriatim along a curved path having a concave portion, transducing means positioned to face the concave portion of the path to co-operate with a document moved therealong, bearing surface means positioned along the path immediately before and after the transducing means, guide surface means in the form of pulleys positioned on either side of the transducing means and defining therebetween a straight line that intersects the path in the form of an endless belt tensioned about pulleys and a drum to drive the belt for movement in the direction of document motion along the path. A back-up device, in the form of a flexible band aligned with the transducing means, is secured at one end to a fixed post, extends around a pulley rotatable about a fixed axis and at the other end is secured to a tension spring. This holds a document against the surface of the transducing means, but its essentially stationary character results in friction between a moving document and the band.

The invention seeks to provide a backup support for receiving and supporting documents in a reliable and efficient manner as they pass a transducer. This invention also seeks to provide a document backup device, having an inherently low maintenance requirement, both as to the maintenance required and the level of skill required to perform such maintenance.

According to the invention, apparatus for transducing information from a series of documents, including transport means for moving documents seriatim along a curved path having a concave portion, stationary transducing means positioned to face the concave portion of the path to co-operate with a document moved therealong, stationary bearing surface means positioned along the path immediately before and after the transducing means, guide surface means positioned on either side of the transducing means and defining therebetween a straight line that intersects the path, an endless belt tensioned about the guide surface means, and means to drive the endless belt for movement in the direction of document motion along the path, is characterised in that the bearing surface means the guide surface means and the endless belt are aligned with the transducer means, the documents are movable by the transport means at a first speed and the endless belt is movable by the belt driving means at a speed in excess of the first speed.

In an embodiment of the invention a curved path for the cheques is defined, such that the characters to be read travel along a concave path. The transducer is positioned adjacent this path and mounted within a smoothly defined pressure bearing surface which extends along the path both before and after the transducer. A flexible pressure belt is wrapped against the curved bearing surface and is tracked around rollers by which it is guided, tensioned and driven. The cheques to be read pass between the pressure belt and the transducer and are thus supported throughout a relatively large arc of travel through the curved path. The geometry of this arrangement is inherently insensitive to variations in thickness and smoothness of the cheques. In addition, it tends to be relatively insensitive to dimensional changes due to wear. Furthermore, by providing separate transport and pressure belts, impact loading as the cheque encounters the belt, is reduced or eliminated. The pressure belt is driven at a speed that is in excess of the speed of the cheque travel.

The scope of the invention is defined by the appended claims; and how it can be carried into effect is hereinafter particularly described with reference to the accompanying drawings, in which:

Figure 1 is a schematic view of an example of information transducing apparatus according to the invention in a cheque processing system;

Figure 2 is a partial perspective view of the transducer portion of the system of Figure 1; and

Figure 3 is an enlarged plan view of a portion of the reader shown in Figure 2.

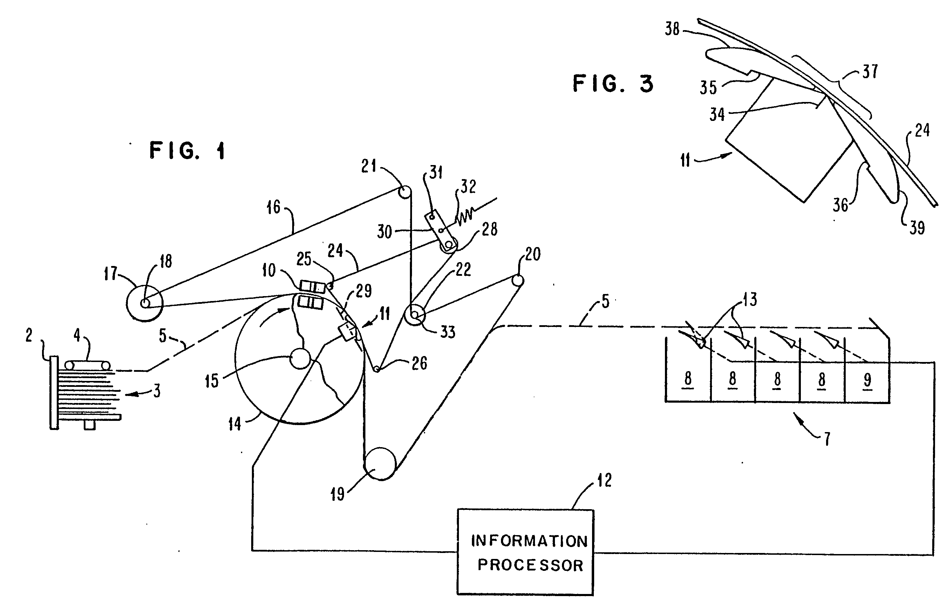

A cheque processing system 1 (Figure 1) in which an information transducer according to the invention is used, includes a cheque supply hopper 2, containing, in use, a stack of cheques or similar documents 3 which are fed seriatim by picker device 4 into a processing path 5. Feed means (not shown) conduct the checks 3 along path 5 to a record reader and thence to a sorter 7, having a plurality of bins 8 and a reject bin 9. As the cheques pass through reader, their magnetic ink characters are magnetised by a magnetiser 10 and the thus magnetised characters are subsequently presented to a magnetic/electric transducer or read head 11 which develops a pattern of electrical signals therefrom and transmits those signals to information processor 12 by which the information content of electrical signals is determined. Information processor 12 controls individual gates 13 of the sorter 7 according to the information read from individual cheques to cause each of the cheques to be delivered to a particular bin 8 in accordance with such information. Where information processor 12 is unable to interpret the electrical signals presented to it, which have been derived from a particular cheque, that cheque will be delivered to the reject bin 9, and will require hand processing by bank personnel. In addition, information correctly read from the cheques is utilized in information processor 12 to record and carry out the financial transactions represented by the cheque. It is to be understood that other processing stations may be arranged along path 5 but are not shown herein as they are not related to the record reader of this invention.

The record reader includes a transport drum 14 which is driven clockwise (Figure 1) about its axial shaft 15 by a belt 16. Belt 16 is entrained around a capstan 18, driven by motor or power source 17, around idler rolls 19, 20 and 21, and around a small diameter upper portion 33 of a power take-off or pressure belt drive roller 22. Motor 17 drives belt 16 and, in turn, drum 14 at a linear speed that substantially matches the speed of cheques 3 as they otherwise approach the record reader on path 5. A span of belt 16 between capstan 18 and idler roll 19 is wrapped around the cylindrical periphery of the transport drum 14 and causes the upper portion of cheques approaching along path 5 to be captured against the transport drum 14 and to move through a curved path conforming to the curvature of drum 14.

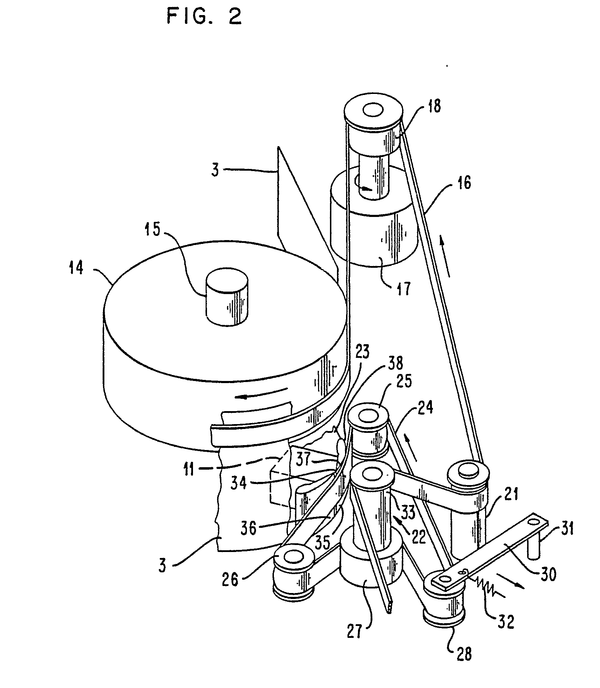

Below the drum 14 is a support structure 23 (Figure 2) in which the magnetiser 10 (Figure 1) and transducer 11 are supported. A belt 24 engages the rear side of the cheques 3 immediately opposite to the transducer 11 to provide reliable presentation of the magnetic ink characters to the transducer 11. Belt 24 is entrained around a pair of pressure span idlers 25 and 26, around a large diameter capstan portion 27 of the power take-off roller 22 and around a movable tension adjustment idler or guide 28. The idlers preferably have crowned guiding surfaces to provide accurate tracking of the belt 24. Idler 28 is mounted on an arm 30 that is pivoted at 31 and is continuously urged outwardly by a heavy spring 32 to exert tension on belt 24. The large diameter of capstan portion 27 of roller 22 with respect to the driven upper portion 33 thereof causes belt 24 to travel faster than belt 16 and the cheques 3 which it transports on the drum 14.

The magnetic transducer 11 can be of any suitable construction and is shown simply schematically with a sensing gap 34 (Figure 2).

Immediately adjacent to and on either side of the sensing gap 34 (Figure 3) of transducer 11 are two bearing surface plates which are referred to as a lead-in shim 35 and a lead-out shim 36. These bearing plates are made of a non-magnetic material and provide a hard, smooth surface against which the cheques 3 are pressed by the backup belt 24. Each shim 35 and 36 includes a cylindrical surface in the region 37 adjacent gap 34 which closely matches the curvature and location of a projection of the cylindrical surface of drum 14 so that the cheques 3 are not distorted by the transport mechanism during reading. The shims 35 and 36 also include lead-in and lead-out regions 38 and 39 respectively, which decrease in radius of curvature outwardly from the cylindrical surface region 37. Lead-in region 38 assists in smoothly capturing curled or folded corners. Support structure 23 (Figure 2) positions transducer 11 and the shims 35 and 26 with respect to idlers 25 and 26, such that a relatively large span of the belt 24 is deformed against the shims 35 and 36 in the cylindrical surface while leaving lead-in and lead-out clearance to facilitate transition with the leading and trailing edges of the cheques. As seen in Figure 1, the idlers 25 and 26 are positioned on opposite sides of the transducer 11, preferably equidistant therefrom, and in positions such that in the absence of support structure 23, transducer 11 and shims 35 and 36, the belt 24 would run from idler 25 to idler 26 along a line 29 which intersects the path 5 on either side of the transducer 11. Accordingly, with the support structure 23, transducer 11 and shims 35 and 36 in position, the belt 24 is displaced from the line 29 and wrapped on the shims 35 and 36, adopting their curvature where in contact.

In operation, cheques 3 are delivered to the record reader along path 5 at a relatively high speed, e.g. 3810 mm (150 inches) per second. As each cheque approaches the drum 14, its upper portion becomes trapped between belt 16 and drum 14 and the cheque is caused to wrap about drum 14, thereby assuming its curvature. As the lower portion of the cheque passes through magnetiser 10, a strong field created by a pair of opposed magnets magnetises the magnetic ink characters along the lower margin of the cheque. Continued motion of the cheque 3 brings the leading edge of its lower portion into the lead-in region between belt 24 and lead-in region 38 of shim 35. The cheque leading edge next comes in contact with belt 24 which yields outwardly to accommodate the cheque thickness but with a minimum of shock or disruption due to the relatively large curvature of the belt span and the overspeed of the belt, i.e. 5715 mm (225 inches) per second. The continued movement of the cheque brings the lower portion, bearing the magnetised magnetic ink characters, smoothly past the read gap 34 of transducer 11 while the belt 24 exerts a widely spread, uniform, and relatively transient-free pressure against the reverse side of the cheque. During this motion, wrinkles or creases in the cheque will tend to be removed by the ironing action of the overspeed belt 24. Preferably, the belt 24 is formed of a woven cloth such as cotton or polyester fibre which is impregnated with an elastomer binder and formed to exhibit a nubby, fabric-rich outer surface that engages the back of the cheques 3 with a low coefficient of friction to minimise cheque wear, particularly near the trailing edge.

Much of the improved reliability of the backup belt construction is derived not only from the improved form of applying and maintaining pressure as thus described above, but also in the ability of the mechanism to maintain relatively uniform performance over an extended period of time. This is achieved in the first instance by the relatively large extent and curvature of the pressure-applying span of belt 24 by which small changes in radius of curvature produce relatively insignificant pressure differences. Such changes can result from cheques of different thickness being received between belt 24 and shims 35 and 36, and can also result from wear of the shims 35 and 36 or of the belt 24. The belt wear itself is reduced by being spread over the relatively large surface area that the belt provides. Furthermore, should the belt 24 break or otherwise become unusable, it is a simple matter for an untrained operator to install a new belt by placing the new belt around idlers 25 and 26, displacing pivoted idler 28 against its spring and loading belt 24 into idler 28 and against the capstan portion 27 of the roller 22. As idlers 25 and 26 are located precisely with respect to transducer 11, the belt 24 will automatically assume a properly adjusted configuration.

## Claims

1. Apparatus for transducing information from a series of documents, including transport means for moving documents (3) seriatim along a curved path having a concave portion, stationary transducing means (11) positioned to face the concave portion of the path to cooperate with a document moved therealong, stationary bearing surface means (35, 36) positioned along the path immediately before and after the transducing means, guide surface means (25, 26), positioned on either side of the transducing means (11) and defining therebetween a straight line that intersects the path, an endless belt (24) tensioned about the guide surface means (25, 26) and means (27) to drive the endless belt (24) for movement in the direction of document motion along the path, characterised in that the bearing surface means (35, 36), the guide surface means (25, 26) and the endless belt (24) are aligned with the transducing means (11), the documents (3) are movable by the transport means (16, 14) at a first speed and the endless belt (24) is movable by the belt driving means (27) at a speed in excess of the first speed.

2. Apparatus according to claim 1, in which the transport means comprises a cylindrical drum (14) and a transport belt (16) wrapped against the outer surface thereof to engage a portion of a document to move the document through a curved path that is substantially defined by the cylindrical periphery of the drum, and the bearing surface means comprising cylindrical surface portions (37), positioned immediately adjacent the transducing means and lying substantially on a projection of the transport drum cylindrical periphery in the path of another portion of a document.

3. Apparatus according to claim 2, including a lead-in surface portion (38) on that bearing surface means (35) positioned immediately before the transducing means, the lead-in surface portion decreasing in radius of curvature outwardly from the cylindrical surface portion, to receive the leading edge of a document presented by the transport means.

4. Apparatus according to claim 2 or 3, including a lead-out surface portion (39) on that bearing surface means (36) positioned immediately after the transducing means, the lead-out surface portion decreasing in radius of curvature outwardly from the cylindrical surface portion, to release the trailing edge of a document.

5. Apparatus according to any preceding claim, including movable guide member (28) for the endless belt (24), resiliently biased to exert tension on the belt.

6. Apparatus according to any preceding claim, in which the belt driving means includes roller means (27) engaging the belt (24) and connected to receive motion from the transport means.

7. Apparatus according to claim 6, in which the transport means includes an endless transport belt (16) entrained about roller means (33) connected to the belt drive roller means (27).

8. Apparatus according to claim 7, in which the transport roller means (33) and belt drive roller means (27) comprise different diameter portions of a common roller (22).

**Revendications**

1. Appareil transducteur d'informations à partir d'une série de documents, comprenant des moyens de transport pour entraîner des documents (3) en série le long d'un chemin incurvé présentant une partie concave, des moyens de transduction fixes (11) disposés en face de la partie concave du chemin pour coopérer avec un document entraîné le long de celui-ci, des portées fixes (33, 36) disposées le long du chemin immédiatement avant et après les moyens de transduction, des surfaces de guidage (25, 26) disposées de chaque côté des moyens de transduction (11) et finissant entre eux une ligne droite qui coupe le chemin, une courroie sans fin (24) tendue autour des surfaces de guidage (25, 26) et des moyens (27) pour entraîner la courroie sans fin (24) dans le sens du mouvement du document le long du chemin, caractérisé en ce que les portées fixed (35, 36), les surfaces de guidage (25, 26) et la courroie sans fin (24) sont alignées avec les moyens de transduction (11), les documents (3) sont entraînés par les moyens de transport (16, 14) à une première vitesse et la courroie sans fin (24) est entraînée par les moyens d'entraînement de courroie (27) à une vitesse supérieure à la première vitesse.

2. Appareil selon la revendication 1 dans lequel les moyens de transport comprennent un tambour cylindrique (14) et une courroie d'entraînement (16) enroulée autour de la surface extérieure dudit tambour pour solliciter une partie d'un document et l'entraîner sur un chemin incurvé qui est pratiquement défini par la périphérie cylindrique du tambour, et les portées comprennent des parties cylindriques (37), disposées immédiatement adjacents aux moyens de transduction et pratiquement sur la projection de la périphérie cylindrique du tambour de transport dans le chemin des documents.

3. Appareil selon la revendication 2 comprenant une surface d'entrée (38) sur la portée (35), disposée immédiatement avant les moyens de transduction, le rayon de courbure de ladite surface d'entrée décroissant vers l'extérieur à partir de la surface cylindrique, de façon à recevoir le bord avant d'un document présenté par les moyens de transport.

4. Appareil selon la revendication 2 ou 3 comprenant une surface de sortie (39) sur la portée (36), disposée immédiatement après les moyens de transduction, le rayon de courbure de ladite surface de sortie décroissant vers l'extérieur à partir de la surface cylindrique pour libérer le bord arrière d'un document.

5. Appareil selon l'une quelconque des revendications précédentes comprenant un guide mobile (28) pour la courroie sans fin (24), rappelé élastiquement pour tendre ladite courroie.

6. Appareil selon l'une quelconque des revendications dans lequel les moyens d'entrainement de la courroie comprennent un galet (27) sollicitant la courroie (24) et raccordé aux moyens de transport pour son entrainement.

7. Appareil selon la revendication 6 dans lequel les moyens de transport comprennent une courroie d'entrainement sans fin (16) entrainée autour du galet (33) raccordé au galet d'entrainement de courroie (27).

8. Appareil selon la revendication 7 dans lequel le galet de transport (33), et le galet d'entrainement de courroie (27) sont formés par des parties de diamètre différent d'un même galet (22).

**Patentansprüche**

1. Apparat zur Umformung von in einer Reihe von Vorlagen enthaltenen Daten mit Befoerderungsmitteln zum Antrieb der Vorlagen (3) in einer Reihenfolge eine gekruemmte einen konkaven Teil aufweisende Bahn entlang, mit stationaeren Umformungsmitteln (11), die dem konkaven Teil der Bahn gegenueberliegend angeordnet sind, so dass sie zu die befoerderte Vorlage gelangen koennen, mit stationaeren die Bahn entlang und unmittelbar vor und nach den Umformungsmitteln angeordneten Lagerflaechen (35, 36), mit Fuehrungsflaechen (25, 26), die jenseits der Umformungsmittel (11) angeordnet sind und dazwischen eine gerade die Bahn kreuzende Linie bestimmen, mit einem in der Gegend der Fuehrungsflaechen (25, 26) gespannten Riemen ohne Ende (24) und mit Antriebsmitteln (27) zum Antrieb des Riemens ohne Ende (24) in der Befoerderungsrichtung der Vorlagen die Bahn entlang, dadurch gekennzeichnet, dass die Lagerflaechen (35, 36), die Fuehrungsflaechen (25, 26) und der Riemen ohne Ende (24) mit den Umformungsmitteln (11) ausgerichtet sind, die Vorlagen (3) mit einer ersten Geschwindigkeit mittels der Befoerderungsmittel (16, 14) befoerdert sind, und der Riemen ohne Ende (24) mit einer hoeheren als die erste Geschwindigkeit mittels der Riemen-Antriebsmittel (27) angetrieben ist.

2. Datenumformungsapparat nach Anspruch 1, dadurch gekennzeichnet, dass die Befoerderungsmittel eine zylindrische Trommel (14), einen Befoerderungsriemen (16), der um die Aussenflaeche der letzteren so gewickelt ist, dass er mit einem Teil einer Vorlage zum Antrieb dieser Vorlage durch eine gekruemmte im wesentlichen von der zylindrischen Peripherie der Trommel definierte Bahn zu Eingriff kommt, und die Lagerflaechen mit zylindrischen Oberflaechenteilen (37) aufweisen, welche unmittelbar den Umformungsmitteln anliegend und im wesentlichen auf einem an der zylindrischen Peripherie der Befoerderungstrommel angebrachten Vorsprung in der Strecke eines anderen Teils einer Vorlage angeordnet sind.

3. Datenumformungsapparat nach Anspruch 2 mit einem vorderen auf der jeweiligen Lagerflaeche (35) unmittelbar vor den Unformungsmitteln angeordneten Oberflaechenteil (38), wobei dessen Kruemmungsradius ausserhalb des zylindrischen Oberflaechenteils kleiner wird, zur Aufnahme der Vorderkante einer von den Befoerderungsmitteln zugefuehrten Vorlage.

4. Datenumformungsapparat nach Anspruch 2 oder 3 mit einem hinteren auf der jeweiligen Lagerflaeche (36) unmittelbar nach den Umformungsmitteln angeordneten Oberflaechenteil (39), wobei dessen Kruemmungsradius ausserhalb des zylindrischen Oberflaechenteils kleiner wird, zum Freilassen der hinteren Kante einer Vorlage.

5. Datenumformungsapparat nach einem der vorhergehenden Ansprueche mit einem bewegbaren Anfuehrungselement (28) fuer den Riemen ohne Ende (24), das mit einer elastischen Rueckstellkraft zur Anwendung einer Spannung auf den Riemen versehen ist.

6. Datenumformungsapparat nach einem der vorhergehenden Ansprueche, wo die Riemen-Antriebsmittel Rollen (27) aufweisen, die in Eingriff mit dem Riemen (24) kommen und so verbunden sind, dass Ihnen Antrieb von den Befoerderungsmitteln aus uebertragen ist.

7. Datenumformungsapparat nach Anspruch 6, wo die Befoerderungsmittel einen um Rollen (33) gefuehrten Befoerderungsriemen ohne Ende (16) einschliessen, welche Rollen mit den Riemen-Antriebsrollen verbunden sind.

8. Datenumformungsapparat nach Anspruch 7, wo die Befoerderungsrollen (33) und die Riemen-Antriebsrollen (27) einer gemeinsamen Rolle (22) zugeordnete Teile mit jeweils verschiedenen Durchmessern einschliessen.

FIG. 3

FIG. 1

INFORMATION PROCESSOR

# FIG. 2